# EUROPEAN PATENT SPECIFICATION

(11) **EP 3 401 228 B1**
(45) Date of publication and mention of the grant of the patent: **10.08.2022**
(21) Application number: 16883489.3
(22) Date of filing: 30.11.2016
(51) Int. Cl.: B65D 6/22, H02B 1/46, H02G 3/08, H02G 3/14

(54) **MULTI-DIRECTIONAL HINGED CONNECTION SYSTEM FOR USE BETWEEN ELECTRICAL BOXES AND THE CORRESPONDING COVERS OR FRAMES THEREOF**
MULTIDIREKTIONALES SCHARNIERTES VERBINDUNGSSYSTEM ZUR VERWENDUNG ZWISCHEN SCHALTSCHRÄNKEN UND DEN ZUGEHÖRIGEN ABDECKUNGEN ODER RAHMEN DAVON
SYSTÈME DE LIAISON PIVOTANT MULTIDIRECTIONNEL ENTRE DES BOÎTES ÉLECTRIQUES ET LEURS CAPOTS OU CHÂSSIS

(30) Priority: 07.01.2016 ES 201630006
(43) Date of publication of application: 14.11.2018
(73) Proprietor: Ide Electric, S.L., 50800 Zuera, Zaragoza (ES)
(72) Inventor: MONTAÑES ABOS, Raquel, 50830 Villanueva de Gállego (Zaragoza) (ES)
(74) Representative: Clarke Modet & Co.
(86) International application number: PCT/ES2016/070848
(87) International publication number: WO 2017/118770

(56) References cited:
- EP-A1- 1 416 600
- EP-A2- 2 159 891
- CN-U- 201 789 213
- ES-U- 1 046 460
- ES-U- 1 046 460
- ES-U- 1 051 876
- GB-A- 2 082 783
- US-A- 5 944 209
- US-A1- 2008 110 661
- US-B1- 9 219 357

## Description

### OBJECT OF THE INVENTION

The present invention relates to a multidirectional hinged connection system between electrical boxes and their covers or frames, usable in electrical distribution boxes.

### BACKGROUND OF THE INVENTION

There are currently different types of electrical boxes consisting of the box strictly speaking, equipped with a hinged system between the same and a cover or frame, to achieve access to the interior of the enclosure and electrical components, such that if a cover is mounted it would become a blind box with connections in its interior and, if a frame is mounted, electrical mechanisms could in turn be mounted thereon that would be accessible for handling thereof, wherein said frame could in turn comprise a cover to protect said mechanisms.

Different solutions are provided for the hinged system between the frame or cover and box body, although in all cases based on various elements and means that render the closure assembly, in case of being effective, complex, expensive and difficult to assemble. Prior art document ES1046460U discloses a hinged system.

The solutions provided comprise a single hinge axis comprising a pin that connects two bushings or semi-hinges moulded or fixed to the box and on the cover or frame. As mentioned earlier, this configuration does not achieve effective closures or is complex, expensive and difficult to assemble. Further, it does not allow the cover or frame to open more than 90 degrees, due to the three-dimensional configurations of the covers, with corners that make it impossible to exceed this opening amplitude. Additionally, due to said complexity and to the associated costs, the hinge system is unique non-configurable, such that the box always opens in the same direction, such that only boxes with a single opening direction (left, right or down) can be purchased.

### DESCRIPTION OF THE INVENTION

The configuration of the hinged connection system between electrical boxes and their covers or frames solves the aforementioned problems. It is preferably applicable in surface boxes, both indoor and outdoor, of the type envisaged for housing and protecting certain electrical elements, such as the classical modular and similar switches, wherein said box comprises a hinged cover or frame for accessing the interior of the enclosure, wherein the cover serves to protect the internal connection made between the box and the frame - which may in turn have its own cover- for the superficial mounting of mechanisms, wherein the frame may be configured through detachable portions of the cover. Additionally, it makes it possible to hinge in three ways (vertically and horizontally, both right and left) with single hinging elements with a simple exchange in the position of said elements. Said differentiating feature and the simplicity of the assembly increase the practicality, innovation and simplicity of the invention.

In accordance with the invention, the system comprises at least one bridge that connects the box and its cover or frame, and articulated anchors for the ends of the bridge, which are disposed on, at least, one side of the box and cover or frame, wherein, at least, one of the anchors for each bridge comprises means movable in a direction perpendicular to the respective open edge of the box or of the frame or cover from an internal position of the bridge during closure to another external opening position, to enable the outward removal of the bridge during the hinged opening of the cover or frame.

With this configuration, the bridges may pivot on their axes on the cover or frame or on the box, thereby achieving total hinging between the two elements. Additionally, a single pair of highly rigid, plastic hinging bridges arranged in the desired hinging position may also be used. It should be noted that the system is simple structurally and in its assembly/disassembly since, due to consisting of bridges -preferably plastic-, it does not require additional elements to perfectly fulfil the function. Since anchors may be disposed for the ends of the bridge on, at least, one side of the box and of the cover or frame, different opening directions of the cover may be configured by simply arranging the bridges on the appropriate anchors, increasing the possibilities of accessibility to the box, of great use when it is located in narrow places or near corners.

Therefore, the market in general, and the respective electric industrial sector in particular, is provided with a box whose connection system between the box and the cover or frame is achieved in an easy and simple manner, without the participation of additional elements such as screws or other fixation means conventionally required to fix the components that participate in the hinging. The system can be easily installed and handled, and its normal use in operation is safe and without risk to the users and their surroundings, fulfilling the technical specifications indicated in the applicable product and installation standards.

### BRIEF DESCRIPTION OF THE FIGURES

FIGURES 1 to 4. Show an electrical box of the invention in different positions during opening thereof; specifically, figure 1 shows the initial opening movement and figures 3 and 4 show the fully open position from two different angles that reveal the existence of anchors for bridges on both sides and on the bottom.
FIGURE 5. Shows an amplified detail of an exploded view of a bridge and two-anchor system of the invention.
FIGURE 6. Shows a detail of a side view of a simple anchor lug.
FIGURE 7. Shows two views of a bridge.
FIGURE 8. Shows a sequence of three side views of a bridge and two-anchor assembly when the box is closed, half open and fully open.

### DESCRIPTION OF A PRACTICAL EMBODIMENT OF THE INVENTION

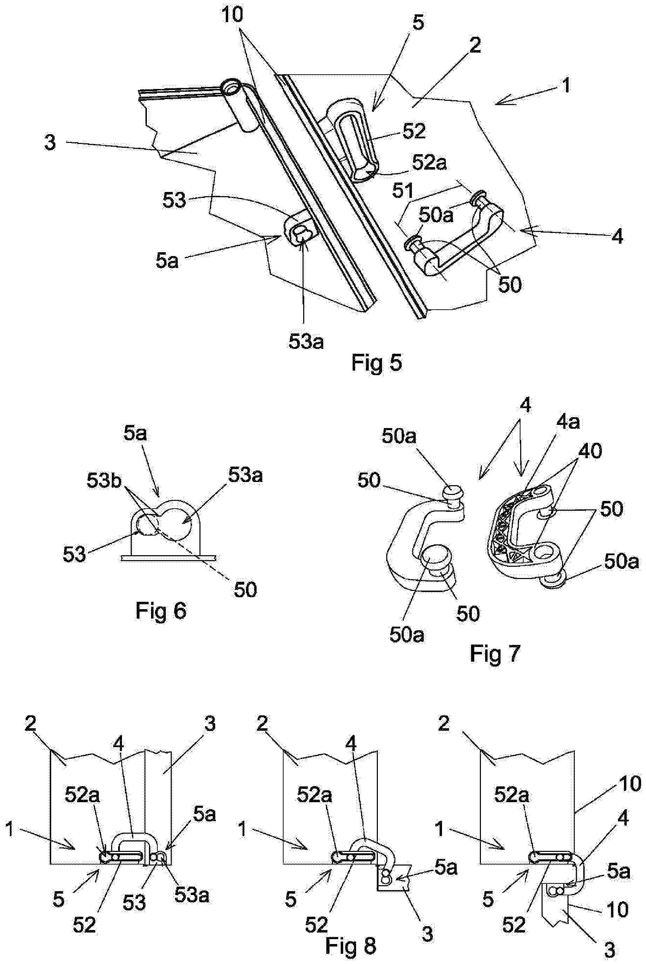

The hinged connection system 1 between electrical boxes 2 and their covers 3 or frames of the invention comprises, at least, a bridge 4 connecting the box 2 and its cover 3 or frame, and articulated anchors 5, 5a for the ends of the bridge 4, which are disposed on, at least, one side 8, 9, 8a, 9a of the box 2 and of the cover 3 or frame, where, at least, one of the anchors 5, 5a for each bridge 4 comprises means movable in a direction perpendicular to the respective open edge 10 of the box 2 or of the frame or cover 3 from an internal position of the bridge 4 during closure (see first view of figure 8) to another external opening position (see second and third views of figure 8 and figures 3 and 4), to enable the outward removal of the bridge 4 when opening the hinged cover 3 or frame.

Specifically, as can be observed in the figures, the system 1 comprises anchors 5, 5a disposed on the two lateral sides 8, 8a and on the bottom side 9, 9a of the box 2 and of the cover 3 or frame to configure lateral hinged openings in both directions and bottom. In general, the anchors 5, 5a are internally disposed on the sides 8, 9 of the box 2 and the sides 8a, 9a of the cover 3 or frame, such that when the box is closed the bridges 4 are protected in the interior thereof, as shown in the first view of figure 8.

Preferably, each bridge 4 comprises two end cylindrical stubs 50 (see figures 5 and 7) having an axis parallel to the edge 10 of the box 2 and of the cover 3 or frame, which enables hinged rotation; while each anchor 5, 5a comprises a lug 52, 53 for insertion of a stub 50, perpendicular to the edge 10 of the box 2 and of the cover 3 or frame; said lug 52, 53 having a width equal to or greater than that of the stub 50 to allow the rotation thereof inserted in the lug 52, 53; and wherein the movable means for moving, at least, one of the anchors 5, 5a for each bridge 4 comprise an elongated lug 52 (see figures 5 and 8) on the corresponding side. This elongated lug 52 configuration allows the stub 50 to move therealong.

Each stub 50 comprises an end widening 50a larger in size than the width of the lug 52, 53, in order to prevent it from escaping in an axial direction; in turn, the lugs 52, 53 comprise end enlargements 52a, 53a larger in size than said widening 50a to allow removal of the stub 50 -from its widening 50a-through the enlargements 52a, 53a.

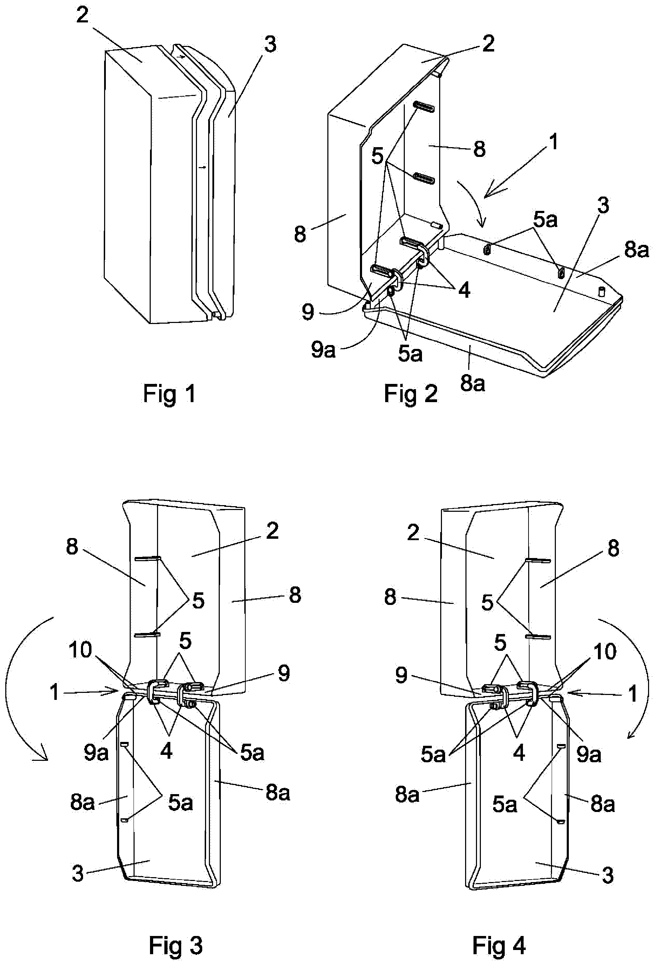

Each bridge 4 is ideally U-shaped, with side branches 40 having a length equal to or greater than the distance of the anchors 5, 5a from the edge 10 of the corresponding side of the box 2 and of the cover 3 or frame, to allow full opening as observed in figures 4 and 8.

The stubs 50 are disposed at the ends of the side branches 40 of each bridge 4, in a lateral projecting position, for insertion into the lugs 52, 53 corresponding to each anchor 5, 5a.

Each bridge 4 is ideally made of moulded plastic material with a U-shaped cross-section and reinforcement ribs 4a in its interior (see figure 7), achieving great rigidity such that the weight of a frame open downwards with the mechanisms mounted thereon can be supported by just two bridges.

Therefore, a highly preferred configuration of the system 1 for a box, as shown in the figures, comprises: at least, two bridges 4; at least, two first simple lug 53 anchors 5a disposed on the two lateral sides 8a and on the bottom side 9a of the cover 3 or frame; and, at least, two second elongated lug 52 anchors 5 disposed on the two lateral sides 8 and on the bottom side 9 of the box 2. First simple lug 53 anchors 5a means that the lug is not elongated since it is not necessary for the stub to move in this case, having preferably envisaged that said first simple lug 53 anchors 5a comprise an end clip 53b (see figure 6) that retains the corresponding stub 50 in a fixed operating position on said simple lug 53.

It should be noted that the bridges 4, once mounted in the desired hinged position (right or left, or bottom side), are not disassembled except deliberately in the event of wanting to change the hinging position, in such a manner as to unclip the stub corresponding to the first anchor 5a and, once freed, slide the bridge 4 along the elongated lug 52 up to the enlargement 52a to remove the other end.

Having sufficiently described the nature of the invention, in addition to the manner in which to put it into practice, it must be stated that the provisions previously indicated and represented in the attached drawings may be subject to detailed modifications provided that they do not alter the main principle. The scope of the invention is defined only by the appended claims.

## Claims

1. A multidirectional hinged connection system (1) between electrical boxes (2) and their covers (3) or frames comprising:
- at least, one bridge (4) connecting the box (2) to its cover (3) or frame, and
- articulated anchors (5, 5a) for the ends of the bridge (4), disposed on, at least, one side (8, 9, 8a, 9a) of the box (2) and of the cover (3) or frame,
Where, at least, one of the anchors (5, 5a) for each bridge (4) comprises means allowing movement of the bridge in a direction perpendicular to the respective open edge (10) of the box (2) or the frame or cover (3) from an internal position of the bridge (4) during closure to another external opening position, to enable the outward removal of the bridge (4) during the hinged opening of the cover (3) or frame, said system (1) **characterised in that** said anchors (5, 5a) are disposed on the two lateral sides (8, 8a) and on the bottom side (9, 9a) of the box (2) and of the cover (3) or frame to configure lateral hinged openings in both directions and bottom. wherein the bridges are mounted in the desired hinged position namely right, left or bottom and disassembled for changing the hinging position.

2. The multidirectional hinged connection system (1) between electrical boxes (2) and their covers (3) or frames, according to the preceding claim, **characterised in that** the anchors (5, 5a) are disposed internally on the box (2) and on the cover (3) or frame.

3. The multidirectional hinged connection system (1) between electrical boxes (2) and their covers (3) or frames, according to any of the preceding claims, **characterised in that** each bridge (4) comprises two end cylindrical stubs (50) having an axis (51) parallel to the edge (10) of the box (2) and of the cover (3) or frame; while each anchor (5, 5a) comprises a lug (52, 53) for insertion of a stub (50), perpendicular to the edge (10) of the box (2) and of the cover (3) or frame; said lug (52, 53) having a width equal to or greater than that of the stub (50); and wherein the movable means for moving, at least, one of the anchors (5, 5a) for each bridge (4) comprise an elongated lug (52) on the corresponding side.

4. The multidirectional hinged connection system (1) between electrical boxes (2) and their covers (3) or frames, according to claim 3, **characterised in that** each lug (50) comprises an end enlargement (50a) of a size greater than the width of the lug (52, 53); in turn, the lugs (52, 53) comprise end enlargements (52a, 53a) of a size greater than that of said enlargements (50a) to allow the removal of the stub (50) through the enlargements (52a, 53a).

5. The multidirectional hinged connection system (1) between electrical boxes (2) and their covers (3) or frames, according to any of the preceding claims, **characterised in that** each bridge (4) is U shaped, with lateral branches (40) of a length equal to or greater than the distance of the anchors (5, 5a) from the edge (10) of the corresponding side of the box (2) and of the cover (3) or frame.

6. The multidirectional hinged connection system (1) between electrical boxes (2) and their covers (3) or frames, according to claim 5, **characterised in that** the stubs (50) are disposed on the ends of the lateral branches (40) of each bridge (4), in a lateral projecting position.

7. The multidirectional hinged connection system (1) between electrical boxes (2) and their covers (3) or frames, according to any of the preceding claims, **characterised in that** each bridge (4) is made of moulded plastic material with a U-shaped cross-section and reinforcement ribs (4a) in its interior.

8. The multidirectional hinged connection system (1) between electrical boxes (2) and their covers (3) or frames, according to any of claims 3 to 7, **characterised in that** it comprises: at least, two bridges (4); at least, two first simple lug (53) anchors (5a) disposed on the two lateral sides (8a) and on the bottom side (9a) of the cover (3) or frame; and, at least, two second elongated lug (52) anchors (5) disposed on the two lateral sides (8) and on the bottom side (9) of the box (2).

9. The multidirectional hinged connection system (1) between electrical boxes (2) and their covers (3) or frames, according to claim 8, **characterised in that** the first simple lug (53) anchor (5a) comprise an end clip (53b) retaining the corresponding stub (50) in a fixed operating position along said simple lug (53).

## Patentansprüche

1. Multidirektionales klappbares Verbindungssystem (1) zwischen Schaltschränken (2) und ihren Abdeckungen (3) oder Rahmen, Folgendes umfassend:
- mindestens eine Brücke (4), die den Schrank (2) mit seiner Abdeckung (3) oder seinem Rahmen verbindet, und
- gelenkige Verankerungen (5, 5a) für die Enden der Brücke (4), die mindestens auf einer Seite (8, 9, 8a, 9a) des Schrankes (2) und der Abdeckung (3) oder des Rahmens angeordnet sind,
wobei mindestens eine der Verankerungen (5, 5a) für jede Brücke (4) Mittel umfasst, die eine Bewegung der Brücke in einer Richtung senkrecht zu der jeweiligen offenen Kante (10) des Schrankes (2) oder des Rahmens oder der Abdeckung (3) von einer inneren Position der Brücke (4) während des Schließens zu einer anderen externen Öffnungsposition ermöglichen, um das Entfernen der Brücke (4) nach außen während der klappbaren Öffnung der Abdeckung (3) oder des Rahmens zu ermöglichen, wobei das System (1) **dadurch gekennzeichnet ist, dass** die Verankerungen (5, 5a) an den beiden seitlichen Seiten (8, 8a) und an der Unterseite (9, 9a) des Schrankes (2) und der Abdeckung (3) oder des Rahmens angeordnet sind, um seitliche klappbare Öffnungen in beiden Richtungen und am Boden auszubilden,
wobei die Brücken in der gewünschten klappbaren Position, nämlich rechts, links oder unten, montiert sind und zum Verändern der Klappposition demontiert werden.

2. Multidirektionales klappbares Verbindungssystem (1) zwischen Schaltschränken (2) und ihren Abdeckungen (3) oder Rahmen gemäß dem vorhergehenden Anspruch, **dadurch gekennzeichnet, dass** die Verankerungen (5, 5a) innen am Schrank (2) und an der Abdeckung (3) oder dem Rahmen angeordnet sind.

3. Multidirektionales klappbares Verbindungssystem (1) zwischen Schaltschränken (2) und ihren Abdeckungen (3) oder Rahmen gemäß einem der vorhergehenden Ansprüche, **dadurch gekennzeichnet, dass** jede Brücke (4) zwei zylindrische Endansätze (50) umfasst, die eine Achse (51) parallel zu der Kante (10) des Schrankes (2) und der Abdeckung (3) oder Rahmens aufweisen; wobei jede Verankerung (5, 5a) eine Lasche (52, 53) zum Einsetzen eines Ansatzes (50) senkrecht zu der Kante (10) des Schrankes (2) und der Abdeckung (3) oder des Rahmens umfasst, wobei die Lasche (52, 53) eine Breite aufweist, die gleich oder größer als die des Ansatzes (50) ist, und wobei die beweglichen Mittel zum Bewegen mindestens einer der Verankerungen (5, 5a) für jede Brücke (4) eine längliche Lasche (52) an der zugehörigen Seite umfassen.

4. Multidirektionales klappbares Verbindungssystem (1) zwischen Schaltschränken (2) und ihren Abdeckungen (3) oder Rahmen gemäß Anspruch 3, **dadurch gekennzeichnet, dass** jede Lasche (50) eine Endausweitung (50a) umfasst, deren Größe größer ist als die Breite der Lasche (52, 53); die Laschen (52, 53) umfassen ihrerseits Endausweitungen (52a, 53a), deren Größe größer ist als die der Ausweitungen (50a), um das Entfernen des Ansatzes (50) durch die Ausweitungen (52a, 53a) zu ermöglichen.

5. Multidirektionales klappbares Verbindungssystem (1) zwischen Schaltschränken (2) und ihren Abdeckungen (3) oder Rahmen gemäß einem der vorhergehenden Ansprüche, **dadurch gekennzeichnet, dass** jede Brücke (4) U-förmig ist, mit seitlichen Schenkeln (40), deren Länge gleich oder größer ist als der Abstand der Verankerungen (5, 5a) von der Kante (10) der zugehörigen Seite des Schrankes (2) und der Abdeckung (3) oder des Rahmens.

6. Multidirektionales klappbares Verbindungssystem (1) zwischen Schaltschränken (2) und ihren Abdeckungen (3) oder Rahmen gemäß Anspruch 5, **dadurch gekennzeichnet, dass** die Ansätze (50) an den Enden der seitlichen Schenkeln (40) jeder Brücke (4) in einer seitlich vorspringenden Position angeordnet sind.

7. Multidirektionales klappbares Verbindungssystem (1) zwischen Schaltschränken (2) und ihren Abdeckungen (3) oder Rahmen gemäß einem der vorhergehenden Ansprüche, **dadurch gekennzeichnet, dass** jede Brücke (4) aus geformtem Kunststoffmaterial mit einem U-förmigen Querschnitt und Verstärkungsrippen (4a) im Inneren hergestellt ist.

8. Multidirektionales klappbares Verbindungssystem (1) zwischen Schaltschränken (2) und ihren Abdeckungen (3) oder Rahmen gemäß einem der Ansprüche 3 bis 7, **dadurch gekennzeichnet, dass** es Folgendes umfasst: mindestens zwei Brücken (4); mindestens erste zwei Verankerungen (5a) der einfachen Lasche (53), die an den beiden seitlichen Seiten (8a) und an der Unterseite (9a) der Abdeckung (3) oder des Rahmens angeordnet sind; und mindestens zwei zweite Verankerungen (5) der länglichen Lasche (52), die an den beiden seitlichen Seiten (8) und an der Unterseite (9) des Schrankes (2) angeordnet sind.

9. Multidirektionales klappbares Verbindungssystem (1) zwischen Schaltschränken (2) und ihren Abdeckungen (3) oder Rahmen gemäß Anspruch 8, **dadurch gekennzeichnet, dass** die erste Verankerung (5a) der einfachen Lasche (53) eine Endklammer (53b) umfasst, die den zugehörigen Ansatz (50) in einer festen Betriebsposition entlang der einfachen Lasche (53) zurückhält.

## Revendications

1. Système de liaison pivotant multidirectionnel (1) entre des boîtes électriques (2) et leurs capots (3) ou châssis, comprenant :
- au moins, un pont (4) reliant le boîtier (2) à son capot (3) ou châssis, et
- des ancrages articulés (5, 5a) pour les extrémités du pont (4), disposés sur, au moins, un côté (8, 9, 8a, 9a) de la boîte (2) et du capot (3) ou du châssis,
où, au moins, l'un des ancrages (5, 5a) pour chaque pont (4) comprend des moyens permettant le déplacement du pont dans une direction perpendiculaire au bord ouvert respectif (10) de la boîte (2) ou du châssis ou du capot (3) depuis une position interne du pont (4) pendant la fermeture vers une autre position d'ouverture externe, pour permettre le retrait vers l'extérieur du pont (4) pendant l'ouverture à charnière du capot (3) ou du châssis, ledit système (1) étant **caractérisé en ce que** lesdits ancrages (5, 5a) sont disposés sur les deux côtés latéraux (8, 8a) et sur le côté du fond (9, 9a) de la boîte (2) et du capot (3) ou du châssis pour configurer des ouvertures à charnière latérales dans les deux directions et le fond
dans lequel les ponts sont montés dans la position de charnière souhaitée, à savoir à droite, à gauche ou en bas, et démontés pour changer la position de charnière.

2. Système de liaison pivotant multidirectionnel (1) entre des boîtes électriques (2) et leurs capots (3) ou châssis, selon la revendication précédente, **caractérisé en ce que** les ancrages (5, 5a) sont disposés intérieurement sur la boîte (2) et sur le capot (3) ou châssis.

3. Système de liaison pivotant multidirectionnel (1) entre des boîtes électriques (2) et leurs capots (3) ou châssis, selon l'une quelconque des revendications précédentes, **caractérisé en ce que** chaque pont (4) comprend deux tronçons cylindriques d'extrémité (50) d'axe (51) parallèle au bord (10) du coffret (2) et du capot (3) ou châssis ; tandis que chaque ancrage (5, 5a) comprend une patte (52, 53) pour l'insertion d'un bout (50), perpendiculaire au bord (10) de la boîte (2) et du capot (3) ou du châssis ; ladite patte (52, 53) ayant une largeur égale ou supérieure à celle du bout (50) ; et dans lequel les moyens mobiles pour déplacer, au moins, l'un des ancrages (5, 5a) pour chaque pont (4) comprennent une patte allongée (52) sur le côté correspondant.

4. Système de liaison pivotant multidirectionnel (1) entre des boîtes électriques (2) et leurs capots (3) ou châssis, selon la revendication 3, **caractérisé en ce que** chaque patte (50) comprend un élargissement d'extrémité (50a) d'une taille supérieure à la largeur de la patte (52, 53) ; à leur tour, les pattes (52, 53) comprennent des élargissements de la patte (52a, 53a) d'une taille supérieure à celle desdits élargissements (50a) pour permettre le retrait de la patte (50) à travers les élargissements (52a, 53a).

5. Système de liaison pivotant multidirectionnel (1) entre des boîtes électriques (2) et leurs capots (3) ou châssis, selon l'une quelconque des revendications précédentes, **caractérisé en ce que** chaque pont (4) est en forme de U, avec des branches latérales (40) d'une longueur égale ou supérieure à la distance des ancrages (5, 5a) du bord (10) du côté correspondant du boîtier (2) et du capot (3) ou châssis.

6. Système de liaison pivotant multidirectionnelle (1) entre des boîtes électriques (2) et leurs capots (3) ou châssis, selon la revendication 5, **caractérisé en ce que** les pattes (50) sont disposées sur les extrémités des branches latérales (40) de chaque pont (4), en position latérale saillante.

7. Système de liaison pivotant multidirectionnel (1) entre des boîtes électriques (2) et leurs capots (3) ou châssis, selon l'une quelconque des revendications précédentes, **caractérisé en ce que** chaque pont (4) est réalisé en matière plastique moulée, avec une section en U et des nervures de renfort (4a) à l'intérieur.

8. Système de liaison pivotant multidirectionnel (1) entre des boîtes électriques (2) et leurs capots (3) ou châssis, selon l'une quelconque des revendications 3 à 7, **caractérisé en ce qu'**il comprend : au moins, deux ponts (4) ; au moins, deux premiers ancrages (5a) à pattes simples (53) disposés sur les deux côtés latéraux (8a) et sur la face inférieure (9a) du couvercle (3) ou du cadre ; et, au moins, deux seconds ancrages (5) à pattes allongées (52) disposés sur les deux côtés latéraux (8) et sur la face inférieure (9) du boîtier (2).

9. Système de liaison pivotant multidirectionnel (1) entre des boîtes électriques (2) et leurs capots (3) ou châssis, selon la revendication 8, **caractérisé en ce que** le premier ancrage (5a) à patte simple (53) comprend un clip d'extrémité (53b) retenant la patte (50) correspondante dans une position de fonctionnement fixe le long de ladite patte simple (53).
